**Europäisches Patentamt**

**European Patent Office**

**Office européen des brevets**

(19)

(11) Veröffentlichungsnummer : **0 358 874 B1**

(12) # EUROPÄISCHE PATENTSCHRIFT

(45) Veröffentlichungstag der Patentschrift :
**16.10.91 Patentblatt 91/42**

(51) Int. Cl.$^5$ : **E05F 15/14, E05D 15/10, B60J 5/06**

(21) Anmeldenummer : **89112433.1**

(22) Anmeldetag : **07.07.89**

(54) **Ausschwenkbare Aussenschiebetür für Fahrzeuge, insbesondere Kraftfahrzeuge.**

(30) Priorität : **12.08.88 DE 3827359**

(43) Veröffentlichungstag der Anmeldung :
**21.03.90 Patentblatt 90/12**

(45) Bekanntmachung des Hinweises auf die
Patenterteilung :
**16.10.91 Patentblatt 91/42**

(84) Benannte Vertragsstaaten :
**DE ES FR GB IT**

(56) Entgegenhaltungen :
**DE-A- 3 419 338**
**GB-A- 2 168 424**

(73) Patentinhaber : **GEBRÜDER BODE & CO.
GMBH
Ochshäuser Strasse 14
W-3500 Kassel 1 (DE)**

(72) Erfinder : **Kramer, Hans
Marktstrasse 12
W-3507 Baunatal 1 (DE)**

(74) Vertreter : **Feder, Wolf-Dietrich et al
Dr. Wolf-D. Feder, Dr. Heinz Feder Dipl.-Ing.
P.-C. Sroka Dominikanerstrasse 37
W-4000 Düsseldorf 11 (DE)**

Jouve, 18, rue Saint-Denis, 75001 PARIS

## Beschreibung

Die Erfindung betrifft eine ausschwenkbare Außenschiebetür für Fahrzeuge, insbesondere Kraftfahrzeuge, mit den Merkmalen aus dem Oberbegriff das Patentanspruchs 1.

Eine derartige Außenschiebetür ist beispielsweise in der DE-OS 3419338 beschrieben. Bei der bekannten Außenschiebetür wird als Übertragungselement ein flexibles Band, in der Praxis ein Zahnriemen, verwendet. Die gesamte Einrichtung und insbesondere die Führung des Übertragungselementes benötigt relativ viel Raum und muß zum Teil in das Fahrzeuginnere verlegt werden, was zusätzlich den Nachteil hat, daß einzelne Teile des Antriebs schwer zugänglich sind und auch Nachrüstungen von Fahrzeugen mit einer Antriebsvorrichtung für die Schiebetür aufwendig werden. Da das Übertragungselement zum Zweck des Antriebs in das Fahrzeuginnere hineingeführt werden muß, wirft die Abdichtung beim Durchtritt des Übertragungselementes durch die Fahrzeugaußenwand Probleme auf und es ist nicht zu verhindern, daß Feuchtigkeit, Schmutz und im Winterbetrieb Schnee- und Eispartikel in das Innere des Fahrzeuges eindringen. Während der Betriebspausen des Fahrzeuges kann im Winter das Übertragungselement an den Durchtrittsstellen vereisen und somit den Antrieb blockieren.

Es sind auch Antriebsvorrichtungen für Außenschiebetüren an Fahrzeugen bekannt, bei denen das Übertragungselement, das in diesem Falle als Seil ausgebildet sein kann, in einem größeren Abstand von der Führungsschiene unterhalb des Fahrzeugbodens angeordnet ist. Derartige Antriebe haben den Nachteil, daß sie einer starken Verschmutzung und im Winter Vereisung ausgesetzt sind.

Die der Erfindung zugrunde liegende Aufgabe bestand darin, eine Außenschiebetür mit den Merkmalen aus dem Oberbegriff des Patentanspruchs 1 so auszubilden, daß die Antriebsvorrichtung wenig Platz beansprucht und leicht zugänglich ist und einer Verschmutzung und Vereisung nur wenig ausgesetzt ist. Weiterhin sollte verhindert werden, daß Feuchtigkeit und Schmutz in das Fahrzeuginnere eintreten können.

Die Lösung dieser Aufgabe erfolgt erfindungsgemäß mit den Merkmalen aus dem kennzeichnenden Teil des Patentanspruchs 1. Vorteilhafte Weiterbildungen der erfindungsgemäßen Außenschiebetür sind in den Unteransprüchen beschrieben.

Der Grundgedanke der Erfindung besteht darin, möglichst viele Teile der Antriebsvorrichtung vollständig außerhalb der Außenwand des Fahrzeugs anzuordnen. Da die Begrenzung der Fahrzeugabmessungen es im allgemeinen nicht zuläßt, auch den Antriebsmotor und gegebenenfalls zusätzliche Elemente, wie Getriebe und eine Kupplung, außerhalb der Außenwand anzubringen, werden diese Elemente in das Fahrzeuginnere verlegt. Die Verbindung zwischen der Antriebsrolle und dem Antriebsmotor erfolgt über eine Antriebswelle, die außer ihrer Drehbewegung keinerlei Relativbewegungen gegenüber der Außenwand des Fahrzeugs ausführt und daher sorgfältig abgedichtet werden kann.

Die Verwendung eines Rundkabels als Übertragungselement eröffnet die Möglichkeit einer Umlenkung des Übertragungselementes auf engstem Raum, seiner Führung innerhalb der Führungsschiene bzw. beim rücklaufenden Trum unmittelbar neben der Führungsschiene. Hierbei ist es besonders vorteilhaft, wenn durch entsprechende Spannvorrichtungen (Ansprüche 2 und 3) dafür gesorgt wird, daß auch das jeweils lose, also das nichtziehende Trum des Übertragungselementes so gespannt ist, daß es straff in der Führungsschiene liegt. Vorteilhaft ist die Antriebsrolle hinter dem hinteren Ende der Führungsschiene angeordnet. In diesem Falle können, wie weiter unten anhand eines Ausführungsbeispiels beschrieben, der Antriebsmotor und die zwischen ihn und die Antriebsrolle eingeschalteten Elemente platzsparend in einer Ecke im hinteren Teil des Fahrzeugs angeordnet sein, wo sie von innen her gut zugänglich sind.

Im folgenden wird anhand der beigefügten Zeichnungen ein Ausführungsbeispiel für eine Außenschiebetür nach der Erfindung näher erläutert.

In den Zeichnungen zeigen :

Fig. 1    in Seitenansicht ein Kraftfahrzeug mit einer ausschwenkbaren Außenschiebetür ;
Fig. 2    in gegenüber Fig. 1 vergrößerter Darstellung und einer Ansicht von oben Teile der Führungsschiene und des Rollenwagens der Außenschiebetür nach Fig. 1 ;
Fig. 3    in gegenüber Fig. 1 stark vergrößerter Darstellung in einer Seitenansicht den Bereich I in Fig. 1, mit der hinter dem hinteren Ende der Führungsschiene angeordneten Antriebsrolle und den Spannvorrichtungen ;
Fig. 4    ist ein Schnitt nach der Linie IV-IV in Fig. 3.

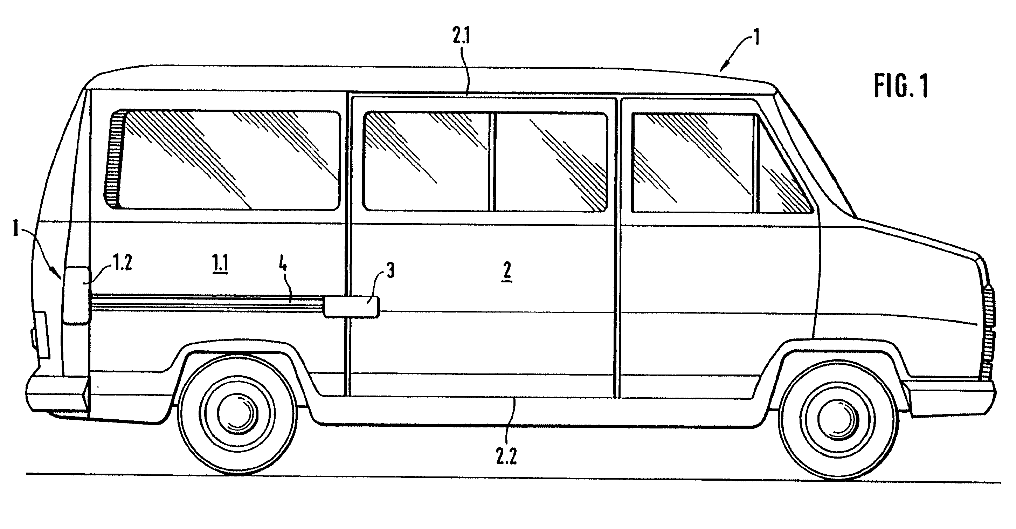

In Fig. 1 ist ein Kraftfahrzeug 1 dargestellt, in dessen seitlicher Außenwand 1.1 sich eine Türöffnung befindet, die mit einer ausschwenkbaren Außenschiebetür 2 verschließbar ist. Die Außenschiebetür 2 ist in üblicher und in nicht eigens dargestellter Weise im Bereich ihrer oberen und unteren Längsseite 2.1 und 2.2 durch Führungsmittel geführt, während sie im Bereich zwischen der horizontalen Mitte und der unteren Längsseite des

2

Türflügels über einen an sich bekannten Rollenwagen 3 in einer Führungsschiene 4 geführt ist.

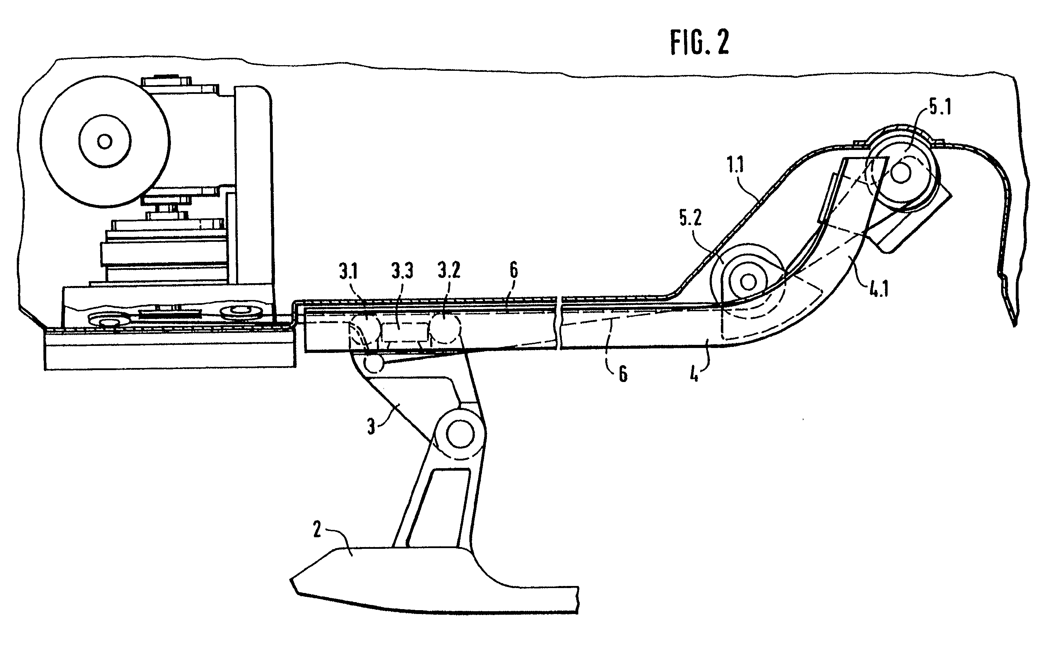

Der Türflügel 2 kann mittels einer automatischen Antriebsvorrichtung geöffnet und geschlossen werden, die in den Fig. 2 bis 4 genauer dargestellt ist.

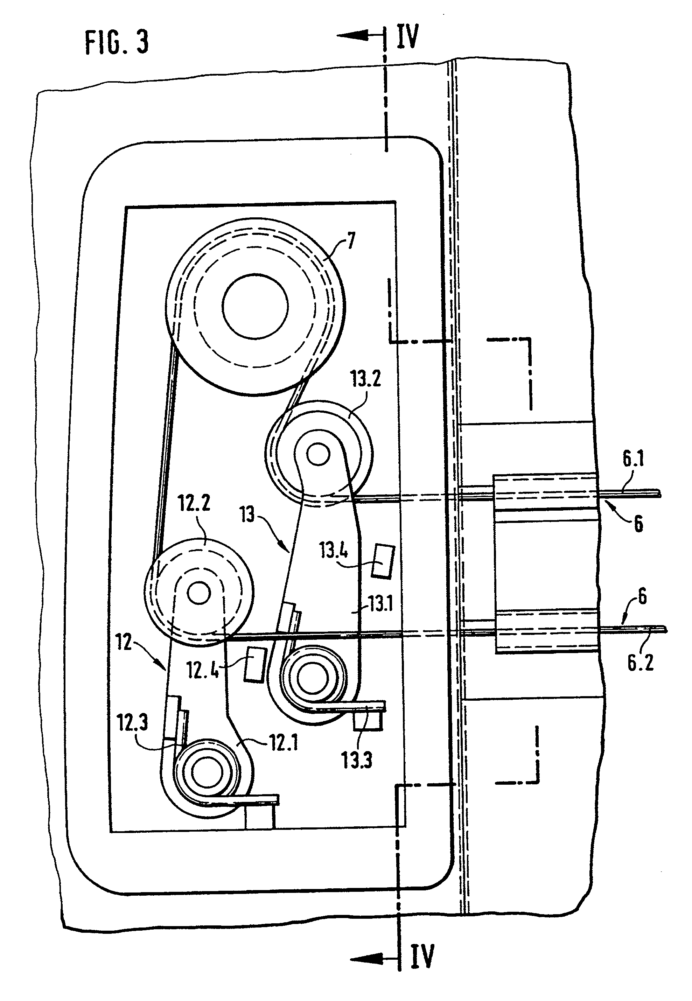

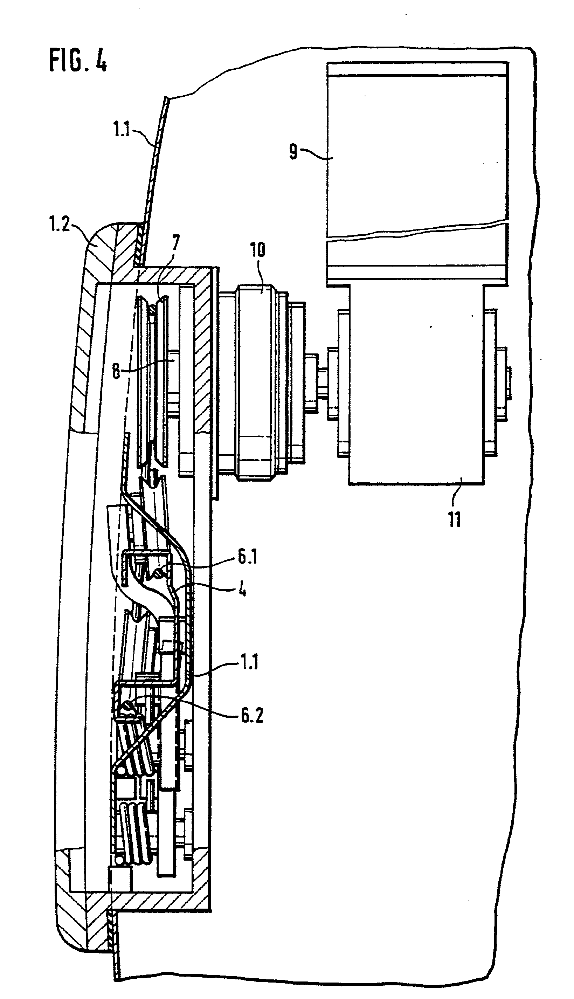

Der mit dem Türflügel 2 gelenkig verbundene Rollenwagen 3 besitzt zwei Führungsrollen 3.1 und 3.2 sowie eine Tragrolle 3.3, die in der an der Außenwand 1.1 des Fahrzeugs angeordneten Führungsschiene 4 geführt sind. In an sich bekannter Weise besitzt die Führungsschiene 4 im Bereich der Türöffnung ein nach innen abgekrümmtes Stück 4.1. Zum Antrieb des Rollenwagens und damit des Türflügels dient ein endloses Rundkabel 6, dessen eines Trum 6.1 (s. Fig. 4) innerhalb der Führungsschiene 4 verläuft und im Bereich der Türöffnung um die Umlenkrolle 5.1 geführt ist, während das sich anschließende andere Trum 6.2 unmittelbar hinter der Führungsschiene 4 zum Ende der Führungsschiene zurückläuft und dort, wie aus Fig. 3 und 4 zu ersehen, nach dem Durchlaufen einer weiter unten näher beschriebenen ersten Spannvorrichtung 12 über eine ein Keilprofil aufweisende Antriebsrolle 7 geführt ist und sich an das durch eine zweite Spannvorrichtung 13 geführte erste Trum 6.1 wieder anschließt.

Das Rundkabel 6 ist mit dem Rollenwagen 3 verbunden, so daß bei entsprechendem Antrieb des Rundkabels 6 durch die Antriebsrolle 7 der Rollenwagen 3 in der Führungsschiene 4 hin- und herbewegt werden kann, was in bekannter Weise zum Öffnen und Schließen des Türflügels führt.

Wie insbesondere den Fig. 3 und 4 zu entnehmen, sind das Rundkabel 6, seine Umlenkrollen 5.1 und 5.2, die Antriebsrolle 7 und die beiden Spannvorrichtungen 12 und 13 in ihrer Gesamtheit außerhalb der Außenwand 1.1 des Fahrzeugs angeordnet. Die zusammen mit den Spannvorrichtungen 12 und 13 hinter einer Abdeckplatte 1.2 angeordnete Antriebsrolle 7 ist über eine Antriebswelle 8, eine Schaltkupplung 10 und ein Untersetzungsgetriebe 11 mit einem Antriebsmotor 9 verbunden. Antriebsmotor, Getriebe und Kupplung sind hinter dem in Fig. 1 mit II bezeichneten Bereich im Inneren des Fahrzeugs 1 in einer Ecke von innen gut zugänglich angeordnet. Die Antriebswelle 8 ist abgedichtet durch die Außenwand 1.1 hindurchgeführt.

Die beiden Spannvorrichtungen 12 und 13 besitzen jeweils einen in einer vertikalen Ebene schwenkbaren Schwenkhebel 12.1 bzw. 13.1, der an seinem freien Ende jeweils eine Umlenkrolle 12.2 bzw. 13.2 trägt, um die das Rundkabel herumgeführt ist. Jeder der beiden Schwenkhebel 12.1 und 13.1 steht unter der Kraftwirkung einer Feder 12.3 bzw. 13.3, die eine solche Kraftwirkung auf die Schwenkhebel ausüben, daß jeweils das nichtziehende Trum des Rundkabels 6 gespannt wird. Dies hat den besonderen Vorteil, daß das jeweils lose Trum nicht durchhängt und die Antriebsrolle 7 in einer vertikalen Ebene liegen kann und auch die beiden Trums in einer Ebene angeordnet werden können, die nahezu vertikal ist oder mit der Vertikalen einen spitzen Winkel einschließt, wie dies aus Fig. 4 entnommen werden kann. Durch das jeweils ziehende Trum werden die Schwenkhebel 12.1 und 13.1 zur Anlage an Anschläge 12.4 und 13.4 gebracht.

Die zwischen Antriebsmotor 9 und Antriebsrolle 7 eingeschaltete steuerbare Schaltkupplung 10 kann als elektromagnetische Kupplung ausgeführt sein, die so ausgebildet sein kann, daß sie bei fehlendem Steuerstrom gelöst ist, damit der Türflügel im Notfall von Hand geöffnet werden kann. Es kann aber auch vorgesehen sein, daß bei geöffneter Tür und ausgeschaltetem Antriebsmotor der Schaltkupplung ein Steuersignal zugeführt wird. Auf diese Weise ist die Kupplung eingerückt und der Antriebsmotor wirkt als Bremse gegen das Zulaufen der Tür, wenn das Fahrzeug am Berg stehenbleibt.

## Patentansprüche

1. Ausschwenkbare Außenschiebetür für Fahrzeuge (1), insbesondere Kraftfahrzeuge, bei welcher der Türflügel (2) über einen Rollenwagen (3) längs einer an der Außenwand (1.1) des Fahrzeugs (1), etwa im Bereich zwischen der horizontalen Mitte und der unteren Längsseite des Türflügels, angeordneten Führungsschiene (4) geführt ist und bei der im Bereich der oberen und/oder der unteren Längsseite des Türflügels (2) zusätzliche Führungsmittel angeordnet sind und die eine Antriebsvorrichtung aufweist mit einem Antriebsmotor (9), der über eine Antriebsrolle (7) ein über Umlenkrollen (5.1 ; 5.2) geführtes, endloses, flexibles, lineares Übertragungselement (6) antreibt, das an einer Stelle seines Umfangs mit dem Rollenwagen (3) gekoppelt ist und dessen Antriebstrum (6.1) jeweils längs der Führungsschiene (4) geführt ist, dadurch gekennzeichnet, daß die mit einem Keilprofil versehene Antriebsrolle (7) und das als Rundkabel ausgebildete Übertragungselement (6) in ihrer Gesamtheit außerhalb der Außenwand (1.1) des Fahrzeugs (1) angeordnet sind, wobei das antreibende Trum (6.1) des Übertragungselementes (6) innerhalb der Führungsschiene (4) und das rücklaufende Trum (6.2) unmittelbar neben der Führungsschiene (4) geführt sind und die Antriebsrolle (7) über eine abgedichtet durch die Außenwand (1.1) geführte Antriebswelle (8) mit dem im Fahrzeuginnern angeordneten Antriebsmotor (9) verbunden ist.

2. Außenschiebetür nach Anspruch 1, dadurch gekennzeichnet, daß in Bewegungsrichtung des Übertragungselementes gesehen, unmittelbar vor und hinter der Antriebsrolle (7) jeweils eine Spannvorrichtung (12, 13) so angeordnet ist, daß das jeweils lose Trum des Übertragungselementes (6) gespannt wird.

3. Außenschiebetür nach Anspruch 2, dadurch gekennzeichnet, daß jede Spannvorrichtung (12, 13) einen eine Umlenkrolle (12.2, 13.2) tragenden Schwenkhebel (12.1, 13.1) aufweist, der in Spannrichtung des Übertragungselementes (6) unter der Kraftwirkung einer Feder (12.3, 13.3) steht.

4. Außenschiebetür nach Anspruch 2 oder 3, dadurch gekennzeichnet, daß die Antriebsrolle (7) in einer vertikalen Ebene liegt.

5. Außenschiebetür nach einem der Ansprüche 1 bis 4, dadurch gekennzeichnet, daß die Antriebsrolle (7) mit dem Antriebsmotor (9) über eine automatisch steuerbare Schaltkupplung (10) verbunden ist.

6. Außenschiebetür nach Anspruch 5, dadurch gekennzeichnet, daß die Schaltkupplung (10) eine elektromagnetische Kupplung ist.

7. Außenschiebetür nach einem der Ansprüche 1 bis 6, dadurch gekennzeichnet, daß die Antriebsrolle (7) hinter dem hinteren Ende der Führungsschiene (4) angeordnet ist.

8. Außenschiebetür nach Anspruch 2 oder 3, dadurch gekennzeichnet, daß die beiden längs der Führungsschiene (4) geführten Abschnitte des antreibenden und des rücklaufenden Trums des Übertragungselements (6) in einer vertikalen Ebene oder einer mit der Vertikalen einen spitzen Winkel einschließenden Ebene liegen.

## Claims

1. Swivel-out external sliding door for vehicles (1), in particular motor vehicles, in which the door wing (2) is guided by means of a roller carriage (3) along a guide rail (4) arranged on the external wall (1.1) of the vehicle (1), for example in the region between the horizontal centre and the lower longitudinal side of the door wing, and in which additional guide means are arranged in the region of the upper and/or the lower longitudinal side of the door wing (2) and which has a drive device with a drive motor (9) which drives, by means of a drive roller (7), a continuous, flexible, linear transmission element (6) which is guided around deflection rollers (5.1 ; 5.2) and which is coupled at one point of its circumference to the roller carriage (3) and the drive strand (6.1) of which is guided in each case along the guide rail (4), characterised in that the drive roller (7) provided with a wedge profile and the transmission element (6) constructed as a round cable are arranged in their entirety outside the external wall (1.1) of the vehicle (1), the driving strand (6.1) of the transmission element (6) being guided inside the guide rail (4) and the return strand (6.2) being guided directly next to the guide rail (4) and the drive roller (7) being connected via a drive shaft (8) led through the external wall (1.1) in a sealed manner to the drive motor (9) arranged in the vehicle interior.

2. External sliding door according to Claim 1, characterised in that, viewed in the direction of movement of the transmission element, in each case one tensioning device (12, 13) is arranged directly in front of and behind the drive roller (7) in such a way that the respective slack strand of the transmission element (6) is tensioned.

3. External sliding door according to Claim 2, characterised in that each tensioning device (12, 13) has a swivel lever (12.1, 13.1) which bears a deflection roller (12.2, 13.2) and is under the force effect of a spring (12.3, 13.3) in the tensioning direction of the transmission element (6).

4. External sliding door according to Claim 2 or 3, characterised in that the drive roller (7) is located in a vertical plane.

5. External sliding door according to one of Claims 1 to 4, characterised in that the drive roller (7) is connected to the drive motor (9) via an automatically controllable clutch (10).

6. External sliding door according to Claim 5, characterised in that the clutch (10) is an electromagnetic clutch.

7. External sliding door according to one of Claims 1 to 6, characterised in that the drive roller (7) is arranged behind the rear end of the guide rail (4).

8. External sliding door according to Claim 2 or 3, characterised in that the two sections, guided along the guide rail (4), of the driving and of the return strand of the transmission element (6) are located in a vertical plane or in a plane which encloses an acute angle with the vertical.

## Revendications

1. Portière coulissante à l'extérieur, pivotable vers l'extérieur, pour véhicules (1) en particulier véhicules automobiles, sur laquelle le battant de porte (2) est guidé au moyen d'un trolley (3), le long d'un rail de guidage (4) disposé sensiblement dans la zone comprise entre le centre horizontal et le côté longitudinal inférieur dudit battant de porte, et sur lequel des moyens de guidage complémentaires sont disposés dans la zone du côté longitudinal supérieur et/ou inférieur dudit battant de porte (2) et laquelle présente un dispositif d'entraînement comprenant un moteur (9) qui entraîne, par l'intermédiaire d'une poulie d'entraînement (7), un élément de transmission (6), linéaire, souple, sans fin, guidé sur des galets de renvoi (5.1, 5.2), ledit élément de transmission (6) étant accouplé en un point de son pourtour au trolley (3) et son brin menant (6.1) étant guidés respectivement le long du rail de guidage (4), caractérisé par le fait que la poulie d'entraînement (7) à profil trapézoïdal et l'élément de transmission (6) réalisé sous la forme d'un câble à section circulaire sont entièrement disposés à l'extérieur de la paroi externe (1.1) du véhicule (1), ledit brin menant (6.1) de l'élément de transmission (6) étant guidé à l'intérieur du rail de guidage (4) et le brin de retour (6.2) étant guidé directement à côté dudit rail de guidage (4), la poulie d'entraînement (7) étant reliée au moteur (9) disposé à l'intérieur du véhicule par un arbre d'entraînement (8) passant de manière étanche à travers la paroi externe (1.1).

2. Portière pivotable vers l'extérieur selon la revendication 1, caractérisée par le fait qu'immédiatement avant et après la poulie d'entraînement (7), considérée dans la direction du mouvement de l'élément de transmission, est disposé respectivement un tendeur (12, 13) de telle sorte que le brin respectivement détendu de l'élément de transmission (6) est mis sous tension.

3. Portière pivotante vers l'extérieur selon la revendication 2 caractérisée par le fait que chaque tendeur (12, 13) est muni d'un levier pivotant (12.1, 13.1) supportant une poulie de renvoi (12.2, 13.2), ce levier étant placé sous l'effet de la force d'un ressort (12.3, 13.3) en direction de la tension de l'élément de transmission (6).

4. Portière pivotante vers l'extérieur selon la revendication 2 ou 3, caractérisée par le fait que la poulie d'entraînement (7) est située dans un plan vertical.

5. Portière pivotante vers l'extérieur selon l'une des revendications 1 à 4, caractérisée par le fait que la poulie d'entraînement (7) est reliée au moteur d'entraînement (9) par un embrayage (10) à commande automatique.

6. Portière pivotante vers l'extérieur selon la revendication 5, caractérisée par le fait que l'embrayage (10) est un embrayage électro-magnétique.

7. Portière pivotante vers l'extérieur selon l'une des revendications 1 à 6, caractérisée par le fait que la poulie d'entraînement (7) est disposée derrière l'extrémité arrière du rail de guidage (4).

8. Portière pivotante vers l'extérieur selon la revendication 2 ou 3, caractérisée par le fait que les deux sections du brin menant ou du brin de retour guidés le long du rail de guidage (4) de l'élément de transmission (6) sont situées dans un plan vertical ou un plan formant un angle aigu avec le plan vertical.

FIG. 1

EP 0 358 874 B1

# FIG. 2

5.1

1.1

5.2

3.1 3.3 3.2 6

4.1

3

6 4

6

2

7

EP 0 358 874 B1

FIG. 3

FIG. 4